# EUROPEAN PATENT SPECIFICATION

(11) **EP 4 241 870 B1**
(45) Date of publication and mention of the grant of the patent: **14.08.2024**
(21) Application number: 22305269.7
(22) Date of filing: 10.03.2022
(51) Int. Cl.: B01D 46/10, B01D 46/44, B60H 3/06

(54) **FILTER SYSTEM**
FILTERSYSTEM
SYSTÈME FILTRANT

(43) Date of publication of application: 13.09.2023
(73) Proprietor: MANN+HUMMEL GmbH, 71636 Ludwigsburg (DE)
(72) Inventor: LARDEUX, Sébastien, 53410 Saint Ouen des Toits (FR); PREUX, Thomas, 53810 Change (FR); FOULBOEUF, Gwenael, 53260 Entrammes (FR); WARNERY, Stéphane, 53970 L'Huisserie (FR)
(74) Representative: Mann + Hummel Intellectual Property

(56) References cited:
- EP-A2- 1 434 012
- WO-A1-2009/064074
- DE-A1- 3 444 126
- KR-B1- 102 103 522

## Description

### Technical Field

The invention relates to a filter system comprising a housing with a fluid inlet and a fluid outlet and a filter element being accommodated in the housing for filtering a fluid flowing from the fluid inlet to the fluid outlet, in particular for cabin air filter applications of a vehicle.

### Prior Art

Smart cabin air filter systems will become more and more used by vehicle manufacturers. Smart means that the air quality (particulate matter/CO₂/humidity) will be controlled to the necessary need in order to optimize the power consumption of the vehicle. High filtration requirements means the use of so-called high efficiency particulate air (HEPA) filters with high pressure drop and thus higher consumption of the blower. When the air quality inside the vehicle is at the required level, HEPA filtration is not needed anymore and the need comes to bypass the filter system. Smart cabin air filter systems are often localized in a very compact space inside the vehicle and so sometimes a simple bypass flap solution cannot be implemented for space and aeraulic performance reasons.

US 7,900,694 B2 discloses an air conditioner for a vehicle. The air conditioner includes: an air conditioner case having an evaporator and a heater core installed therein and having a blower installed at an inlet thereof; a movable filter for moving between an air-filtering location and an air-nonfiltering location of the air conditioner case; a judging means for judging whether air blown by the blower inside the air conditioner case is contaminated; and a driving means for moving the movable filter to the air-filtering location when the judging means determines that the air is contaminated and to the air-non-filtering location when the judging means determines that the air is not contaminated.

### Disclosure of the Invention

It is an object of the invention to provide a filter system with an improved filter service life.

The aforementioned object is achieved according to one aspect of the invention by a filter system comprising a housing with a fluid inlet and a fluid outlet and a filter element being accommodated in the housing for filtering a fluid flowing from the fluid inlet to the fluid outlet, wherein an actuator is provided to rotate the filter element between a first position and a second position in the housing, wherein the fluid outlet is sealed by the filter element when the filter element is in the first position and wherein the fluid outlet is open for unfiltered fluid passage from the fluid inlet to the fluid outlet when the filter element is in the second position, wherein a locking means is provided to lock the filter element in the first position.

Advantageous embodiments and advantages of the invention are described in the further claims, the description and the drawings.

According to a first aspect of the invention, a filter system is proposed, comprising a housing with a fluid inlet and a fluid outlet and a filter element being accommodated in the housing for filtering a fluid flowing from the fluid inlet to the fluid outlet, wherein an actuator is provided to rotate the filter element between a first position and a second position in the housing. The fluid outlet is sealed by the filter element when the filter element is in the first position and wherein the fluid outlet is open for unfiltered fluid passage from the fluid inlet to the fluid outlet when the filter element is in the second position. A locking means is provided to lock the filter element in the first position.

The actuator may be connected to a lever arrangement comprising at least two linked levers for rotating the filter element, wherein a first lever is driven by the actuator and a second lever is linked to a rotational joint of the filter element. The lever arrangement advantageously enables rotation of the filter element with a low torque und facilitates on the other side the establishment of locking means for locking the filter element in the first position.

The locking means may be locking the filter element in the first position in a self-locked manner when the lever arrangement is rotated beyond a dead center position of the two levers when pressing the filter element against the fluid outlet. This enables for moving the filter element between the two positions with a low consumption of energy necessary to maintain the position of the filter element in the end position, where the actuator even may be deactivated.

The filter system according to an embodiment of the invention comprises a bypass solution for smart cabin air filter system applications. The focus lies on the bypass of an HEPA filter element to increase the filter service life and to reduce the pressure drop of the filter system. The solution may be part of the power consumption optimization with an intelligent monitoring of the air quality inside and outside the vehicle. When the outside and inside air quality is at a good level, the HEPA filter is not needed. Therefore the filter system may be bypassed, reducing the pressure drop and so the power consumption of the vehicle. The power consumption is becoming more and more important with battery electric vehicles. The proposed filter system enables to rotate the filter frame of the filter element with a reduced needed torque and enables with a locking system to always maintain pressure on the gasket to ensure a good and robust sealing.

The filter system comprises four rotating shafts in total, two driving shafts and two driven shafts. The two driven shafts are linked together by a lever arrangement that transmit the torque from the actuator to the driving shafts. The driven shafts are then making the link between the driving shafts and the frame of the filter element holding the filter body.

The proposed filter system thus offers a significant advantage compared to current heating ventilation and air conditioning (HVAC) application filter systems where a bypass of the filter system is done using flaps where the filter element always stays in a fixed position. The flap solution leads in some specific cases to issues such as increasing pressure drop and compactness issues.

With the rotary bypass the proposed filter system may be positioned in narrow spaces and the aeraulic section optimized, thus optimizing the pressure drop and again the consumption of the vehicle.

With the locking means, the filter system can deactivate the actuator while maintaining the gasket of the seat of the filter element compressed. The kinematic movement of the rotating shaft also enables a reduced amount of torque to both put the frame of the filter element in motion and compress the sealing. A reduced output torque for the actuator implies a reduced cost for such an actuator. The invention also enables to implement a bypass design when the vehicle environment is very complex.

The locking means is based on a current concept of injection press locking systems. Thus the filter element is locked in the closed position to maintain a good sealing and still is reversible by the actuator.

According to a favorable embodiment of the filter system, the filter element may be provided with a rotary axis being extended parallel to a longitudinal side of the filter element for being rotated between the first position and the second position along the rotary axis. In such a way the filter element may advantageously be moved to the fluid outlet in order to filter the passing fluid or removed in order to establish a bypass mode for the passing fluid.

According to a favorable embodiment of the filter system, the filter element may comprise a frame accommodating a filter body, in particular a replaceable filter body, wherein a fluid passage through the filter body is transverse to a plane spanned by the longitudinal side and a transverse side of the filter element. Thus the filter body may easily be replaced if the filtering capacity of the filter body is exhausted.

According to a favorable embodiment of the filter system, a turning shaft may be connected to the actuator, in particular an electric actuator, for being driven by the actuator, the turning shaft being located parallel to the longitudinal side of the filter element for rotating the filter element between the first and the second position. By this way the filter element may be rotated by the actuator with a considerably low torque necessary for rotation. Advantageously, an electric actuator may be used for driving the turning shaft, but principally other actuators like e.g. vacuum actuators may also be implemented for rotation the filter element.

According to a favorable embodiment of the filter system, a gasket may be arranged circumferencing the fluid outlet and/or the filter element for sealing the filter element in the first position against the fluid outlet. Thus the filter element may advantageously be sealed to the fluid outlet in order to avoid leakage during filtering the passing fluid.

According to a favorable embodiment of the filter system, the actuator may be deactivated when the filter element is in the first position or in the second position. The locking means still maintain the filter element in the chosen position with the fluid outlet closed by the filter element for filtering the passing fluid or with the fluid outlet open for bypassing the filter element.

According to a favorable embodiment of the filter system, a sealing shape may be provided on the fluid outlet and/or on the filter element. The sealing shape serves for a tight sealing of the filter element against the fluid outlet and may be provided on either the housing part of the fluid outlet or on the filter element interface to the fluid outlet or on both sides.

According to a favorable embodiment of the filter system, the actuator may comprise a position sensor for determining the position of the filter element. Thus the activator may be deactivated when the filter element is in the chosen position.

According to a favorable embodiment of the filter system, a fluid quality sensor may be provided so that the filter element is rotatable between the first and the second position depending on a quality of the fluid passing through the filter element, in particular depending on at least a signal of the fluid quality sensor. By this way the fluid may be filtered by the filter element in the first position when the quality of the fluid, in particular air in the case of cabin air filtering, is below a given threshold. When the quality of the fluid is above the given threshold the filter element may be moved to the second position in order to bypass the filter element and let the fluid pass unfiltered from the fluid inlet to the fluid outlet.

According to a favorable embodiment of the filter system, an elastic means may be arranged at the filter element and/or the housing for absorbing movements of the filter element in the second position. The elastic means may reduce vibrations of the filter element in the second position, thus reducing noise caused by the vibrations as well as increasing service lifetime of the filter element.

### Brief Description of the Drawings

Further advantages result from the following drawing description. Embodiments of the invention are shown in the drawings. The drawings, the description, and the claims contain numerous features in combination. The person skilled in the art will expediently also consider the features individually and combine them into sensible further combinations. For example,
- Fig. 1: shows a top view with open housing of a filter system with a filter element in a second position according to an embodiment of the invention and an intersection plane B-B marked;
- Fig. 2: shows a three-dimensional view of the filter system of Fig. 1;
- Fig. 3: shows a longitudinal cut view of the filter system in the intersection plane B-B according to Fig. 1;
- Fig. 4: shows a longitudinal cut view of a filter system with a closed housing according to a further embodiment of the invention;
- Fig. 5: shows a top view with open housing of the filter system according to Fig. 1 with the filter element in a dead center position according to an embodiment of the invention and an intersection plane C-C marked;
- Fig. 6: shows a three-dimensional view of the filter system of Fig. 5;
- Fig. 7: shows a longitudinal cut view of the filter system in the intersection plane C-C according to Fig. 5;
- Fig. 8: shows a top view with open housing of the filter system according to Fig. 1 with the filter element in a first position according to an embodiment of the invention and an intersection plane A-A marked;
- Fig. 9: shows a three-dimensional view of the filter system of Fig. 8; and
- Fig. 10: shows a longitudinal cut view of the filter system in the intersection plane A-A according to Fig. 8;

### Detailed Description of the Drawings

The Figures show merely examples and are not intended to be limiting. Similar or equal elements are referred to with same reference numerals in the Figures.

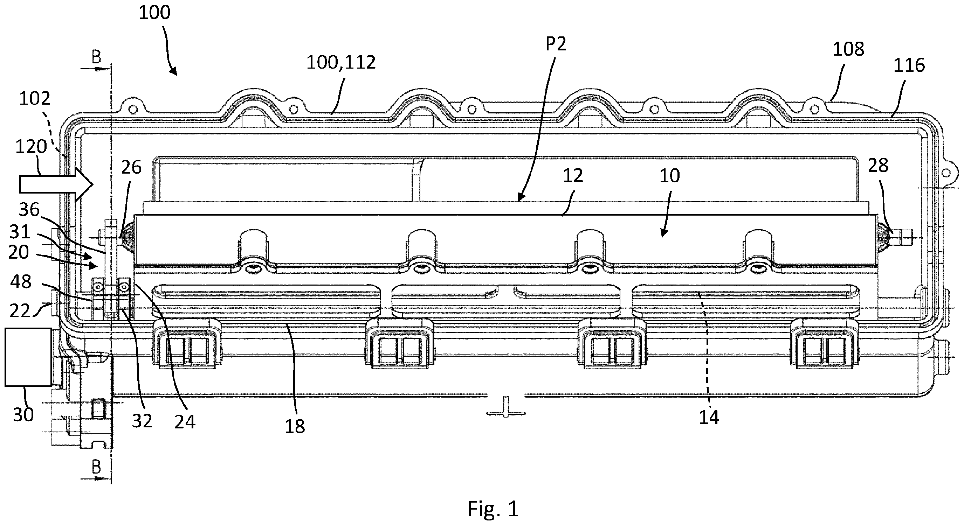

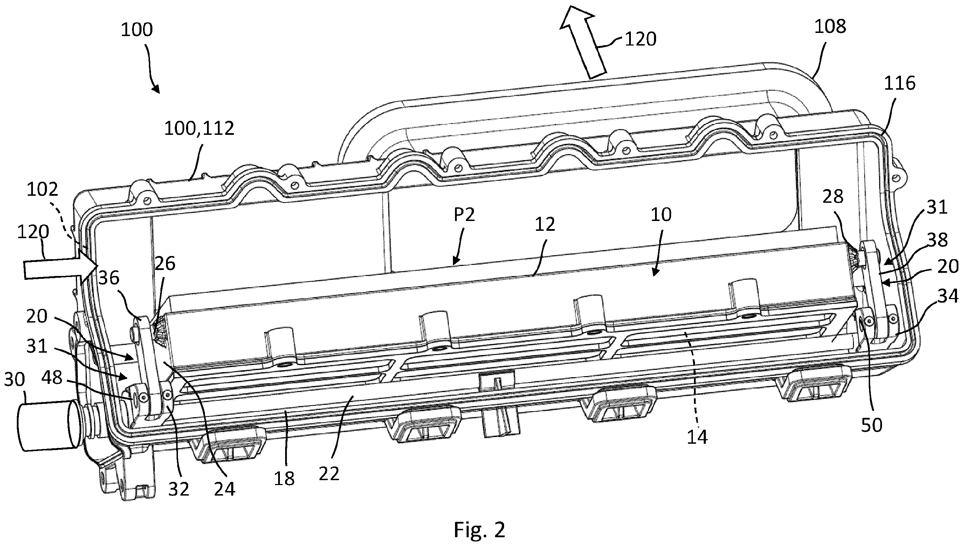

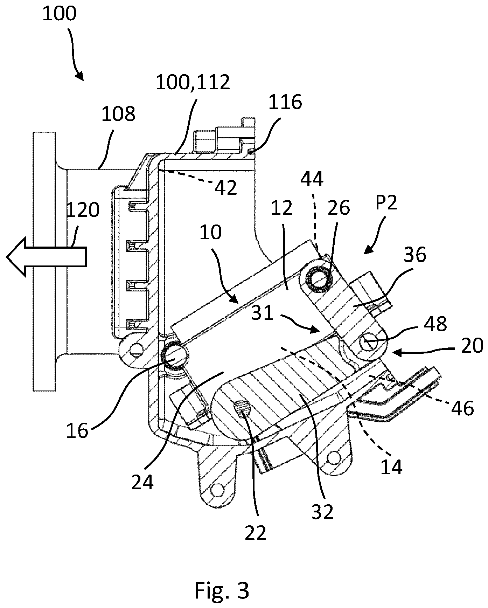

Figure 1 shows a top view with open housing 110 of a filter system 100 with a filter element 10 in a second position P2 according to an embodiment of the invention and an intersection plane B-B marked. Figure 2 shows a three-dimensional view of the filter system 100 of Figure 1. In Figure 3 a longitudinal cut view of the filter system 100 in the intersection plane B-B according to Figure 1 is shown.

The filter system 100 comprises a housing 110 with a fluid inlet 102 and a fluid outlet 108. The housing 110 comprises a first housing part 112, where the fluid outlet 108 is located and a second housing part 114 which is removed in the Figures 1 to 3. The fluid inlet 102 may be realized on a side of the housing 110 in the first housing part 112 or in the second housing part 114 and is not visible in the Figures 1 to 3.

The fluid inlet 102 may receive the fluid from an ambient filter as is used frequently for filtering cabin air in vehicles.

The filter system 100 further comprises a filter element 10 being accommodated in the housing 110 for filtering a fluid flowing from the fluid inlet 102 to the fluid outlet 108. An actuator 30 is provided to rotate the filter element 10 between a first position P1 and a second position P2 in the housing 110. The actuator 30 is marked in the Figures only as a symbol and may be significantly larger in reality. The actuator 30 may be realized as an electric actuator 30 with an electric drive. Principally other actuators, like e.g. vacuum driven actuators as used frequently in vehicles, may also be used.

The filter element 10 may be implemented as a HEPA filter for high quality filtering of a cabin air filter system.

The filter element 10 comprises a frame 12 accommodating a filter body 14, in particular a replaceable filter body 14, wherein a fluid passage through the filter body 14 is transverse to a plane spanned by the longitudinal side 18 and a transverse side 24 of the filter element 10. Thus easy replacement of the filter body 14 is possible when the lifetime of the filter body 14 is ended.

As the filter body 14 is located inside the frame 12 it is not visible in the Figures 1 and 2.

The fluid outlet 108 is sealed by the filter element 10 when the filter element 10 is in the first position P1 which means that the fluid passing from the fluid inlet 102 to the fluid outlet 108 is filtered by the filter element 10. The fluid flow 120is indicated by a big arrow.

The fluid outlet 108 is open for unfiltered fluid passage from the fluid inlet 102 to the fluid outlet 108 when the filter element 10 is in the second position P2. In the Figures 1 to 3 the filter element 10 is in the second position P2 which means that the filter element 10 is bypassed by the fluid flowing unfiltered from the fluid inlet 102 to the fluid outlet 108.

The filter element 10 is provided with a rotary axis 16, which is to be seen in Figure 3, being extended parallel to a longitudinal side 18 of the filter element 10 for being rotated between the first position P1 and the second position P2 along the rotary axis 16.

A turning shaft 22 is connected to the actuator 30 for being driven by the actuator 30. The turning shaft 22 is located parallel to the longitudinal side 18 of the filter element 10 for rotating the filter element 10 between the first and the second position P1, P2.

The actuator 30 is connected via the turning shaft 22 to a lever arrangement 31 comprising at least two linked levers 32, 34, 36, 38 for rotating the filter element 10, wherein a first lever 32, 34 is driven by the actuator 30 and a second lever 36, 38 is linked to a rotational joint 26, 28 of the filter element 10.

As may be seen in the cut view in Figure 3 the first lever 32 is fixed to the turning shaft 22 on one side and linked via a rotational joint 48 to the second lever 36 on the other side. The second lever 36 is linked via the rotational joint 26 to the frame 12 of the filter element 10. The frame 12 of the filter element 10 is rotatable via the rotary axis 16 in one corner of the frame 12.

The lever arrangement 31 may comprise a second set of levers 34, 38 as is to be seen in Figure 2. This may be realized with filter elements 10 with larger dimensions of the longitudinal side 18. With smaller filter elements 10 only one set of levers 32, 34, 36, 38 on one transverse side 24 of the frame 12 may be sufficient for driving the filter element 10. In Figure 1 the second set of levers 34, 38 is omitted.

Further, a fluid quality sensor may be provided so that the filter element 10 is rotatable between the first and the second position P1, P2 depending on a quality of the fluid passing through the filter element 10, in particular depending on at least a signal of the fluid quality sensor. Thus the fluid outlet 108 may be opened for fresh air supply or closed with the filter element 10 for filtering the air depending on the quality of the air surrounding the vehicle.

An elastic means 46 may arranged at the filter element 10 and/or the housing 110 for absorbing movements of the filter element 10 in the second position P2. Thus vibrations of the vehicle exciting the filter element 10 especially when the filter element 10 is in the second position P2 may be reduced in order to prolong the lifetime of the filter element 10. Equally possible noise may be reduced by the elastic means 46 when the filter element 10 is located in the second position P2.

A gasket 42 may be arranged circumferencing the fluid outlet 108 and/or the filter element 10 for sealing the filter element 10 in the first position P1 against the fluid outlet 108. A sealing shape 44 for tight sealing may be provided on the fluid outlet 108 and/or on the filter element 10.

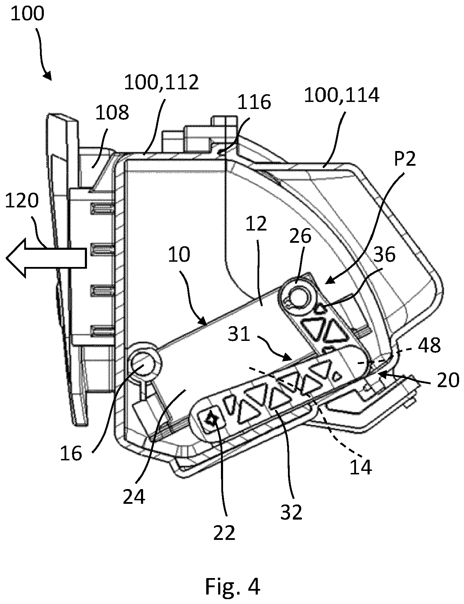

Figure 4 shows a longitudinal cut view of a filter system 100 with a closed housing 110 according to a further embodiment of the invention. The filter system 100 is quite similar to the embodiment shown in Figures 1 to 3 and therefore does not need further explanation.

The filter system 100 shown in Figure 4 exhibits a closed housing 110 comprising a first housing part 112 with the fluid outlet 108 and a second housing part 114. The first housing part 112 and the second housing part 114 are tightly sealed with a circumferencing gasket 116 in the first housing part 112. The gasket 116 is explicitly to be seen in the Figures 1 and 2.

A locking means 20, based on the lever arrangement 31, is provided to lock the filter element 20 in the first position P1. The locking means 20 is locking the filter element 10 in the first position P1 in a self-locked manner when the lever arrangement 31 is rotated beyond a dead center position 40 of the two levers 32, 34, 36, 38 when pressing the filter element 10 against the fluid outlet 108. Therefore the actuator 30 may be deactivated when the filter element 10 is in the first position P1 or in the second position P2 for saving consumption of the vehicle. For this purpose the actuator 30 may comprise an integrated position sensor for determining the position P1, P2 of the filter element 10.

The locking means 20 advantageously enables to maintain a pressure between both sides of the frame 12 of the filter element 10 for better sealing in the first position P1 and reducing vibration issues on the filter element 10.

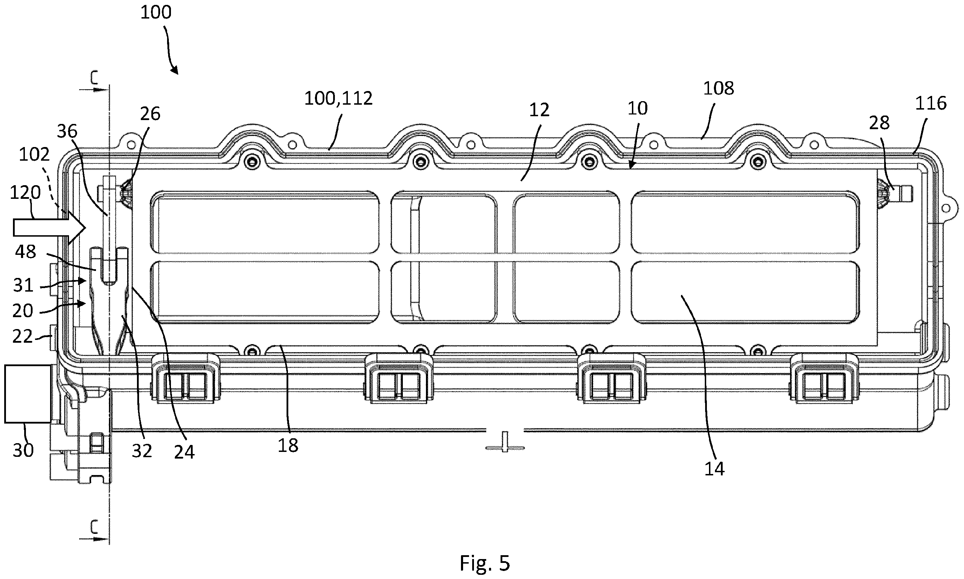

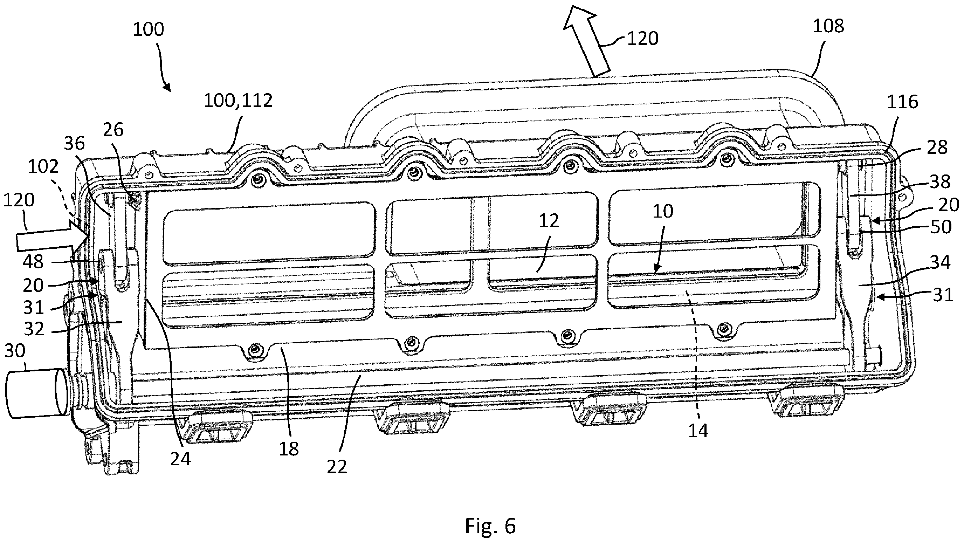

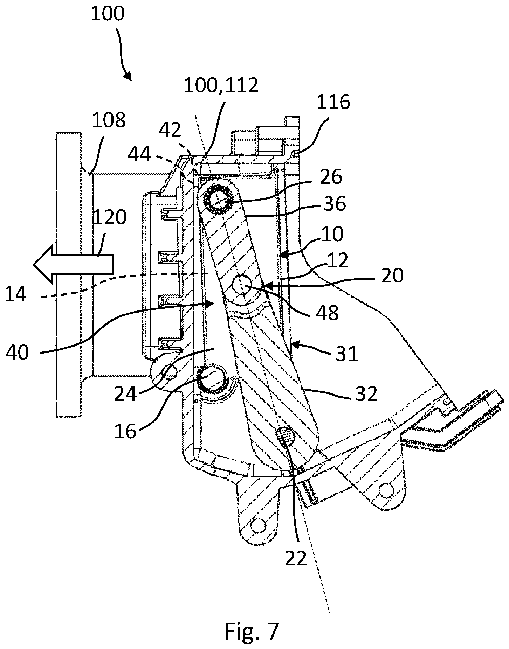

Figure 5 shows a top view with open housing 110 of the filter system 100 according to Figure 1 with the filter element 10 in a dead center position according to an embodiment of the invention and an intersection plane C-C marked. Figure 6 shows a three-dimensional view of the filter system 100 of Figure 5, whereas Figure 7 shows a longitudinal cut view of the filter system 100 in the intersection plane C-C according to Figure 5.

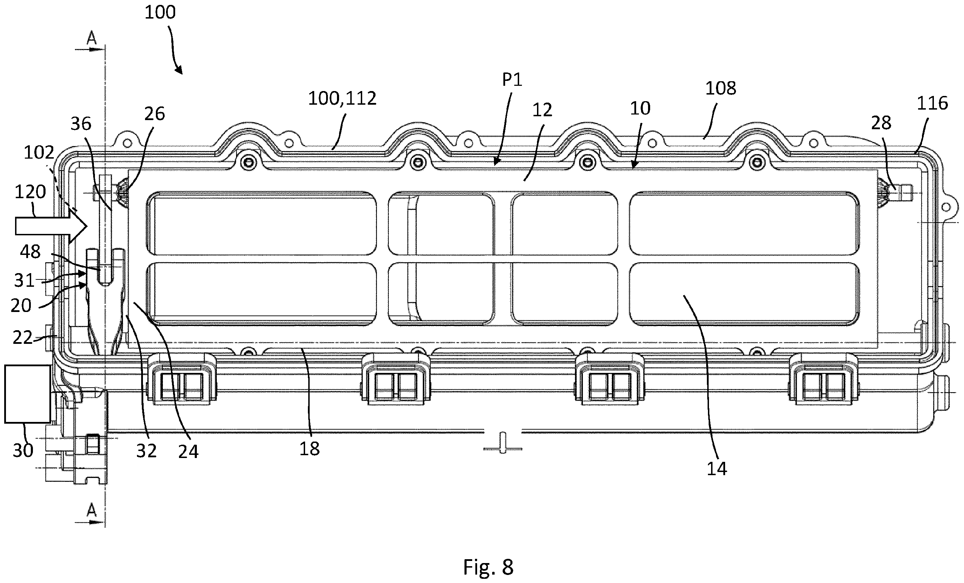

As may explicitly to be seen in the cut view in Figure 7 the two levers 32, 36 of the lever arrangement 31 are positioned along a straight line, thus pressing the filter element 10 at the end with the rotational joint 26 deeper into the gasket 42 than on the lower end at the rotary axis 16. This dead center position thus is an instable position of the lever arrangement 31 realized as locking means 20. Any further rotation of the turning shaft 22 will snap the lever arrangement into the first position of the filter element 10 which is to be seen in the Figures 8 to 10.

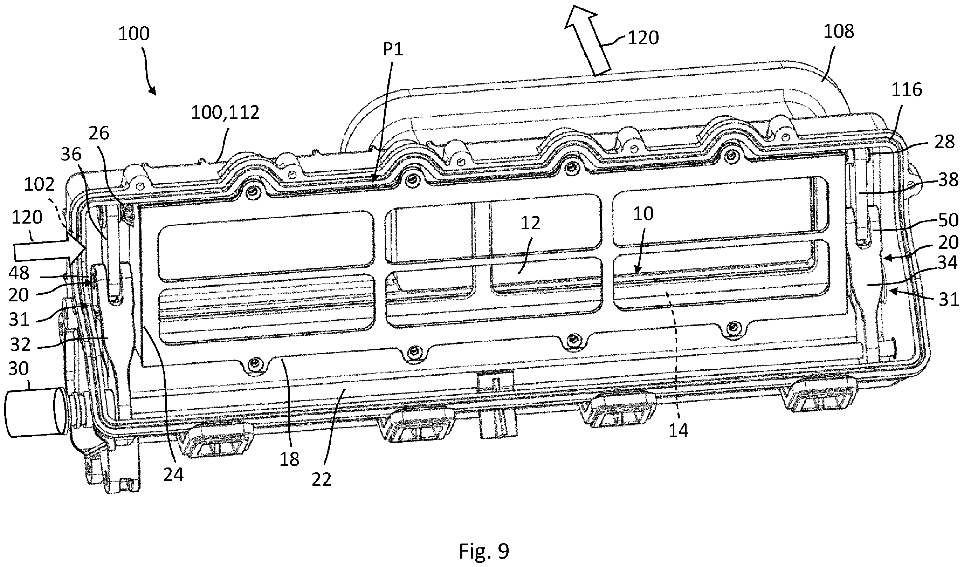

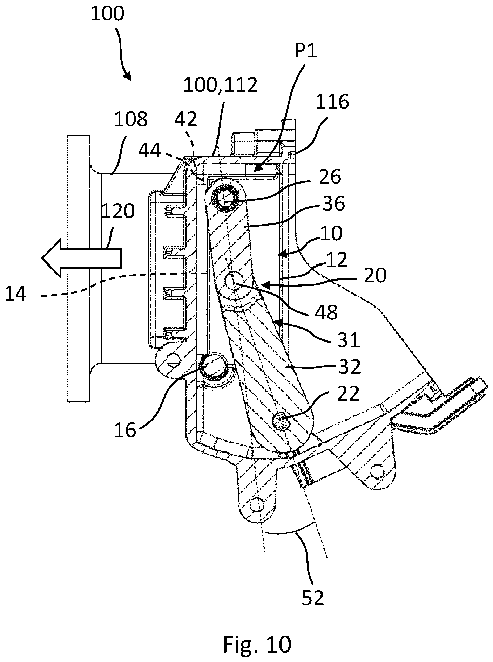

Figure 8 shows a top view with open housing 110 of the filter system 100 according to Figure 1 with the filter element 10 in a first position P1 according to an embodiment of the invention and an intersection plane A-A marked. Figure 9 shows a three-dimensional view of the filter system 100 of Figure 8, whereas in Figure 10 a longitudinal cut view of the filter system 100 in the intersection plane A-A according to Figure 8 is shown.

As may be seen explicitly in the cut view in Figure 10 the two levers 32, 36 are in a position characterized by an angle 52 being greater than zero. The frame 12 of the filter element 10 is located parallel to the section plane of the housing part 112 serving as an interface of the fluid outlet 108 for the filter element 10.

In this first position P1 of the filter element 10 the lever arrangement 31 realized as locking means 20 exhibits a stable position. Therefore the actuator 30 may be deactivated in this position P1 thus saving energy consumption of the vehicle.

### Reference numerals

- 10: filter element
- 12: frame
- 14: filter body
- 16: rotary axis
- 18: longitudinal side
- 20: locking means
- 22: turning shaft
- 24: transverse side
- 26: rotational joint
- 28: rotational joint
- 30: actuator
- 31: lever arrangement
- 32: lever
- 34: lever
- 36: lever
- 38: lever
- 40: dead center position
- 42: gasket
- 44: sealing shape
- 46: elastic means
- 48: rotational joint
- 50: rotational joint
- 52: angle
- 100: filter system
- 102: fluid inlet
- 108: fluid outlet
- 110: housing
- 112: housing part
- 114: housing part
- 116: gasket
- 120: fluid flow
- P1: first position
- P2: second position

## Claims

1. A filter system (100) comprising a housing (110) with a fluid inlet (102) and a fluid outlet (108) and a filter element (10) being accommodated in the housing (110) for filtering a fluid flowing from the fluid inlet (102) to the fluid outlet (108),
wherein an actuator (30) is provided to rotate the filter element (10) between a first position (P1) and a second position (P2) in the housing (110),
wherein the fluid outlet (108) is sealed by the filter element (10) when the filter element (10) is in the first position (P1) and wherein the fluid outlet (108) is open for unfiltered fluid passage from the fluid inlet (102) to the fluid outlet (108) when the filter element (10) is in the second position (P2),
wherein a locking means (20) is provided to lock the filter element (10) in the first position (P1),
wherein the actuator (30) is connected to a lever arrangement (31) comprising at least two linked levers (32, 34, 36, 38) for rotating the filter element (10), wherein a first lever (32, 34) is driven by the actuator (30) and a second lever (36, 38) is linked to a rotational joint (26, 28) of the filter element (10),
wherein the locking means (20) is locking the filter element (10) in the first position (P1) in a self-locked manner when the lever arrangement (31) is rotated beyond a dead center position (40) of the two levers (32, 34, 36, 38) when pressing the filter element (10) against the fluid outlet (108).

2. The filter system according to claim 1, wherein the filter element (10) is provided with a rotary axis (16) being extended parallel to a longitudinal side (18) of the filter element (10) for being rotated between the first position (P1) and the second position (P2) along the rotary axis (16).

3. The filter system according to claim 1 or 2, wherein the filter element (10) comprises a frame (12) accommodating a filter body (14), in particular a replaceable filter body (14), wherein a fluid passage through the filter body (14) is transverse to a plane spanned by the longitudinal side (18) and a transverse side (24) of the filter element (10).

4. The filter system according to any one of the preceding claims, wherein a turning shaft (22) is connected to the actuator (30), in particular an electric actuator (30), for being driven by the actuator (30), the turning shaft (22) being located parallel to the longitudinal side (18) of the filter element (10) for rotating the filter element (10) between the first and the second position (P1, P2).

5. The filter system according to any one of the preceding claims, wherein a gasket (42) is arranged circumferencing the fluid outlet (108) and/or the filter element (10) for sealing the filter element (10) in the first position (P1) against the fluid outlet (108).

6. The filter system according to any one of the claims 4 to 5, wherein the actuator (30) is deactivated when the filter element (10) is in the first position (P1) or in the second position (P2).

7. The filter system according to any one of the preceding claims, wherein a sealing shape (44) is provided on the fluid outlet (108) and/or on the filter element (10).

8. The filter system according to any one of the preceding claims, wherein the actuator (30) comprises a position sensor for determining the position (P1, P2) of the filter element (10).

9. The filter system according to any one of the preceding claims, wherein a fluid quality sensor is provided so that the filter element (10) is rotatable between the first and the second position (P1, P2) depending on a quality of the fluid passing through the filter element (10), in particular depending on at least a signal of the fluid quality sensor.

10. The filter system according to any one of the preceding claims, wherein an elastic means (46) is arranged at the filter element (10) and/or the housing (110) for absorbing movements of the filter element (10) in the second position (P2).

## Patentansprüche

1. Filtersystem (100), umfassend ein Gehäuse (110) mit einem Fluideinlass (102) und einem Fluidauslass (108) und ein Filterelement (10), das in dem Gehäuse (110) aufgenommen ist, um ein Fluid zu filtern, das von dem Fluideinlass (102) zu dem Fluidauslass (108) strömt,
wobei ein Aktuator (30) vorgesehen ist, um das Filterelement (10) zwischen einer ersten Position (P1) und einer zweiten Position (P2) in dem Gehäuse (110) zu drehen,
wobei der Fluidauslass (108) durch das Filterelement (10) abgedichtet ist, wenn das Filterelement (10) in der ersten Position (P1) ist, und wobei der Fluidauslass (108) für den Durchlass von ungefiltertem Fluid von dem Fluideinlass (102) zu dem Fluidauslass (108) offen ist, wenn das Filterelement (10) in der zweiten Position (P2) ist,
wobei eine Verriegelungseinrichtung (20) vorgesehen ist, um das Filterelement (10) in der ersten Position (P1) zu verriegeln,
wobei der Aktuator (30) mit einer Hebelanordnung (31) verbunden ist, die mindestens zwei miteinander verbundene Hebel (32, 34, 36, 38) zum Drehen des Filterelements (10) umfasst, wobei ein erster Hebel (32, 34) von dem Aktuator (30) angetrieben wird und ein zweiter Hebel (36, 38) mit einem Drehgelenk (26, 28) des Filterelements (10) verbunden ist,
wobei die Verriegelungseinrichtung (20) das Filterelement (10) in der ersten Position (P1) selbstsichernd verriegelt, wenn sich die Hebelanordnung (31) über eine Totpunktposition (40) der beiden Hebel (32, 34, 36, 38) hinaus dreht, wenn das Filterelement (10) gegen den Fluidauslass (108) gedrückt wird.

2. Filtersystem nach Anspruch 1, wobei das Filterelement (10) mit einer Drehachse (16) vorgesehen ist, die sich parallel zu einer Längsseite (18) des Filterelements (10) erstreckt, um zwischen der ersten Position (P1) und der zweiten Position (P2) entlang der Rotationsachse (16) gedreht zu werden.

3. Filtersystem nach Anspruch 1 oder 2, wobei das Filterelement (10) einen Rahmen (12) umfasst, der einen Filterkörper (14), insbesondere einen auswechselbaren Filterkörper (14), aufnimmt, wobei ein Fluiddurchlass durch den Filterkörper (14) quer zu einer Ebene verläuft, die von der Längsseite (18) und einer Querseite (24) des Filterelements (10) überbrückt wird.

4. Filtersystem nach einem der obigen Ansprüche, wobei eine Drehwelle (22) mit dem Aktuator (30), insbesondere einem elektrischen Aktuator (30), verbunden ist, um von dem Aktuator (30) angetrieben zu werden, wobei die Drehwelle (22) parallel zu der Längsseite (18) des Filterelements (10) angeordnet ist, um das Filterelement (10) zwischen der ersten und der zweiten Position (P1, P2) zu drehen.

5. Filtersystem nach einem der obigen Ansprüche, wobei ein Dichtungsring (42) um den Fluidauslass (108) und/oder das Filterelement (10) herum angeordnet ist, um das Filterelement (10) in der ersten Position (P1) gegen den Fluidauslass (108) abzudichten.

6. Filtersystem nach einem der Ansprüche 4 bis 5, wobei der Aktuator (30) deaktiviert ist, wenn sich das Filterelement (10) in der ersten Position (P1) oder in der zweiten Position (P2) befindet.

7. Filtersystem nach einem der obigen Ansprüche, wobei eine Dichtungsform (44) am Fluidauslass (108) und/oder am Filterelement (10) vorgesehen ist.

8. Filtersystem nach einem der obigen Ansprüche, wobei der Aktuator (30) einen Positionssensor zur Bestimmung der Position (P1, P2) des Filterelements (10) umfasst.

9. Filtersystem nach einem der obigen Ansprüche, wobei ein Fluidqualitätssensor vorgesehen ist, so dass das Filterelement (10) zwischen der ersten und der zweiten Position (P1, P2) in Abhängigkeit von einer Qualität des durch das Filterelement (10) strömenden Fluids drehbar ist, insbesondere in Abhängigkeit von mindestens einem Signal des Fluidqualitätssensors.

10. Filtersystem nach einem der obigen Ansprüche, wobei an dem Filterelement (10) und/oder dem Gehäuse (110) ein elastisches Mittel (46) angeordnet ist, um Bewegungen des Filterelements (10) in der zweiten Position (P2) aufzufangen.

## Revendications

1. Système de filtre (100) comprenant un boîtier (110) ayant une entrée de fluide (102) et une sortie de fluide (108) et un élément filtrant (10) logé dans le boîtier (110) pour filtrer un fluide s'écoulant de l'entrée de fluide (102) vers la sortie de fluide (108),
dans lequel un actionneur (30) est prévu pour faire tourner l'élément filtrant (10) entre une première position (P1) et une seconde position (P2) dans le boîtier (110),
dans lequel la sortie de fluide (108) est scellée par l'élément filtrant (10) lorsque l'élément filtrant (10) est dans la première position (P1) et dans lequel la sortie de fluide (108) est ouverte pour le passage de fluide non filtré de l'entrée de fluide (102) vers la sortie de fluide (108) lorsque l'élément filtrant (10) est dans la seconde position (P2),
dans lequel un dispositif de verrouillage (20) est prévu pour verrouiller l'élément filtrant (10) dans la première position (P1),
dans lequel l'actionneur (30) est relié à un agencement de leviers (31) comprenant au moins deux leviers liés (32, 34, 36, 38) pour faire tourner l'élément filtrant (10), dans lequel un premier levier (32, 34) est entraîné par l'actionneur (30) et un second levier (36, 38) est lié à un joint de rotation (26, 28) de l'élément filtrant (10),
dans lequel le dispositif de verrouillage (20) bloque l'élément filtrant (10) dans la première position (P1) de manière autobloquante lorsque l'agencement de leviers (31) est tourné au-delà d'une position de point mort (40) des deux leviers (32, 34, 36, 38) lors de la pression de l'élément filtrant (10) contre la sortie de fluide (108).

2. Système de filtre selon la revendication 1, dans lequel l'élément filtrant (10) est prévu avec un axe de rotation (16) s'étendant parallèlement à un côté longitudinal (18) de l'élément filtrant (10) pour être tourné entre la première position (P1) et la seconde position (P2) le long de l'axe de rotation (16).

3. Système de filtre selon la revendication 1 ou 2, dans lequel l'élément filtrant (10) comprend un cadre (12) logeant un corps de filtre (14), notamment un corps de filtre remplaçable (14), dans lequel un passage de fluide traversant le corps de filtre (14) est transversal à un plan traversé par le côté longitudinal (18) et un côté transversal (24) de l'élément filtrant (10).

4. Système de filtre selon l'une quelconque des revendications précédentes, dans lequel un arbre de rotation (22) est relié à l'actionneur (30), notamment un actionneur électrique (30), pour être entraîné par l'actionneur (30), l'arbre de rotation (22) étant situé parallèlement par rapport au côté longitudinal (18) de l'élément filtrant (10) pour faire tourner l'élément filtrant (10) entre la première et la seconde position (P1, P2).

5. Système de filtre selon l'une quelconque des revendications précédentes, dans lequel une bague d'étanchéité (42) est disposée autour de la sortie de fluide (108) et/ou de l'élément filtrant (10) pour assurer l'étanchéité de l'élément filtrant (10) dans la première position (P1) contre la sortie de fluide (108).

6. Système de filtre selon l'une quelconque des revendications 4 à 5, dans lequel l'actionneur (30) est désactivé lorsque l'élément filtrant (10) est dans la première position (P1) ou dans la seconde position (P2).

7. Système de filtre selon l'une quelconque des revendications précédentes, dans lequel une forme d'étanchéité (44) est prévue au niveau de la sortie de fluide (108) et/ou de l'élément filtrant (10).

8. Système de filtre selon l'une quelconque des revendications précédentes, dans lequel l'actionneur (30) comprend un capteur de position permettant de déterminer la position (P1, P2) de l'élément filtrant (10).

9. Système de filtre selon l'une quelconque des revendications précédentes, dans lequel un capteur de qualité du fluide est prévu pour que l'élément filtrant (10) soit mobile en rotation entre la première et la seconde position (P1 , P2) en fonction d'une qualité du fluide traversant l'élément filtrant (10), notamment en fonction d'au moins un signal du capteur de qualité du fluide.

10. Système de filtre selon l'une quelconque des revendications précédentes, dans lequel un dispositif élastique (46) est disposé au niveau de l'élément filtrant (10) et/ou du boîtier (110) pour absorber les mouvements de l'élément filtrant (10) dans la seconde position (P2).
